# EUROPÄISCHE PATENTSCHRIFT

(11) **EP 1 184 653 B1**
(45) Veröffentlichungstag und Bekanntmachung des Hinweises auf die Patenterteilung: **14.10.2009**
(21) Anmeldenummer: 01120560.6
(22) Anmeldetag: 29.08.2001
(51) Int. Cl.: G01M 1/24, G01M 1/26, G01M 1/34

(54) **Auswuchtmaschine und Einrichtung zum Ausgleich einer Unwucht**
Balancing machine and arrangement for compensating an unbalance
Machine d'équilibrage et arrangement de compensation d'un balourd

(30) Priorität: 30.08.2000 DE 10042814
(43) Veröffentlichungstag der Anmeldung: 06.03.2002
(73) Patentinhaber: Schenck RoTec GmbH, 64293 Darmstadt (DE)
(72) Erfinder: Hörr, Friedrich, 64285 Darmstadt (DE); Weyrich, Wilhelm, 64732 Bad König (DE); Rogalla, Martin, 64297 Darmstadt (DE)
(74) Vertreter: Haar, Lucas Heinz Jörn

(56) Entgegenhaltungen:
- EP-A- 0 803 720
- DE-A- 4 334 244
- DE-A- 19 601 743
- US-A- 3 934 963
- US-A- 5 493 763
- FEDERN K.; HACK H.: 'Kurbelwellen-Auswuchtwerk mit selbstt{tigem Ausgleich' MTZ MOTORTECHNISCHE ZEITSCHRIFT Nr. 5, 01 Januar 1952, VIEWEG VERLAG, WIESBADEN, DE, Seiten 121 - 123, XP009099381

## Beschreibung

Die Erfindung betrifft Einrichtung zum Ausgleich einer Unwucht in einer Auswuchtmaschine für mehrere Lagerstellen aufweisende Rotoren, insbesondere Kurbelwellen, mit mehreren, Lagerstellen des Rotors zuordenbaren Lagereinrichtungen zur Lagerung des Rotors, mit einer Materialentfernungs-einrichtung und einer Einrichtung zur Fixierung des Rotors beim Ausgleichsvorgang.

Aus der Druckschrift B1420 der Carl Schenck AG mit dem Titel "Auswuchtmaschinen für Kurbelwellen" ist eine Auswuchtmaschine der eingangs angegebenen Art bekannt, die zur Ermittlung der Unwucht fertig bearbeiteter Kurbelwellen und zum Ausgleich der ermittelten Unwucht vorgesehen ist. Der schwingfähig gegen das Maschinenbett abgestützte Schwingrahmen weist mehrere längsverschiebliche und austauschbare Lagereinrichtungen zur Aufnahme der Kurbelwelle an dafür geeigneten Lagerstellen auf, beispielsweise an den äußeren und dem mittleren Hauptlager bei einer 4-Zylinder-Kurbelwelle. Bei der bekannten Auswuchtmaschine sind Gegenhalter vorgesehen, die das Abheben der Kurbelwelle während der Rotation aufgrund freier Momente der Kurbelwelle verhindern. Zum Ausgleich der ermittelten Unwucht ist ein Bohrportal vorgesehen, das in Längsrichtung der Kurbelwelle verschiebbar ist und eine in radialer Richtung verschiebbare, als Bohreinrichtung ausgebildete Materialentfemungseinrichtung aufweist. Es ist bei dieser bekannten Auswuchtmaschine nicht auszuschließen, daß es beim Bohren in die durch ihr Eigengewicht eingelagerte Kurbelwelle besonders bei leichteren Kurbelwellen zu Bewegungen der eingelagerten Kurbelwelle kommt.

Aus US-A-3934963 ist eine Einrichtung der im Oberbegriff des Patentanspruchs 1 angegebenen Art bekannt, welche mehrere Materialentfemungseinrichtungen und mehrere Einrichtungen zur Fixierung des Rotors beim Ausgleichsvorgang aufweist, die auf zwei Bearbeitungsstationen verteilt sind. Jede Bearbeitungsstation enthält mehrere, den Lagern der Kurbelwelle zugeordnete Lagerböcke und einen an diesen schwenkbar gelagerten Spannbacken, der einen federnd abgestützten Spannkolben zum Festspannen eines Kurbelzapfens und Spannschuhe zum Festspannen der Lagerzapfen der Kurbelwelle aufweist. Die eine Bearbeitungsstation weist zwei nebeneinander angeordnete Materialentfernungseinrichtungen zum Entfernen von Material an den Endabschnitten der Kurbelwelle auf. In der zweiten Bearbeitungsstation ist mittig eine Materialentfernungseinrichtung mit zwei parallelen Werkzeugen vorgesehen, die zur Bearbeitung der mittigen Ausgleichsgewichte der Kurbelwelle dienen. Mit Hilfe einer Transporteinrichtung werden die auszuwuchtenden Kurbelwellen nacheinander von Bearbeitungsstation zu Bearbeitungsstation transportiert.

Aus DE 43 34 244 A ist eine Vorrichtung zum Ausgleichen unterschiedlicher Systemunwuchten beim Auswuchten von Rotoren mit unsymmetrischer Massenverteilung, insbesondere unsymmetrischer Kurbelwellen bekannt. Hierbei ist an einem der Antriebselemente der Auswuchtmaschine ein Schwenkgewicht vorgesehen, das um die Drehachse verdreht werden kann, um eine Anpassung an eine andere Systemunwucht herbeizuführen.

In XP009099381 ist ein Kurbelwellen-Auswuchtwerk mit selbsttätigem Ausgleich beschrieben, das in ein Messteil und in ein Ausgleichsteil gegliedert ist, wobei vorn auf dem Maschinenbett der Messteil mit Antriebsaggregat und zwei schwingbaren Lagerungen für die Kurbelwelle und eingebauten Mess-, Anzeige- und Steuergeräten und dahinter der Ausgleichsteil angeordnet ist. Der Ausgleichsteil besteht aus zwei vertikalen feststehenden Bohrwerken und den Stützlagern für die Welle, sowie den zugehörigen Spannelementen und einer Dreheinheit. Eine Umlege-Einheit mit zwei Greiferhebeln verbindet Messteil und Ausgleichsteil. Mit dieser Maschine kann nur eine Kurbelwellenausführung ausgewuchtet werden.

Aus EP-A-0 803 720 ist eine Unwuchtmessstation bekannt, in der auch der Unwuchtausgleich z.B. durch Bohren oder Fräsen vorgenommen werden kann. Beim Ausgleichsvorgang werden alternativ oder zusätzlich zu den während des Unwuchtmessvorgangs aktivierten Lagereinrichtungen die beiderseits des Unwuchtausgleichsorts nächstgelegenen Lagereinrichtungen aktiviert, so dass ein Gegenlager bei der Bearbeitung gebildet wird. Das Ausgleichswerkzeug kann über Längsholme axial verschieblich geführt werden, Eine Einrichtung zur Fixierung des Rotors ist nicht vorhanden.

Der Erfindung liegt die Aufgabe zugrunde, eine Auswuchtmaschine sowie eine Einrichtung zum Ausgleich einer Unwucht zu schaffen, die eine flexible Anpassung an unterschiedliche Rotoren bzw. Kurbelwellen ermöglicht und bei der unabhängig von der Art der eingelagerten Rotoren die Auswuchtgenauigkeit verbessert ist.

Diese Aufgabe wird erfindungsgemäß durch eine Einrichtung mit den in Anspruch 1 angegebenen Merkmalen gelöst.

Mit der erfindungsgemäßen Einrichtung zum Ausgleich einer Unwucht ist sichergestellt, daß die Materialentfernung am Rotor durch zum Beispiel Bohren von Ausgleichsbohrungen ohne Beeinträchtigung des Ausgleichsvorgangs, insbesondere ohne Beschädigung am Werkzeug oder am Werkstück, nämlich dem Rotor bzw. der Kurbelwelle, erfolgt, da der Rotor durch eine separate Einrichtung festgehalten wird. Dadurch werden Bewegungen des Rotors während des Materialentfernungsvorganges sicher unterbunden. Die erfindungsgemäße Ausgestaltung ermöglicht erstmals Hochgeschwindigkeits-Zerspanungsvorgänge mit hartmetall- oder diamantbestückten Werkzeugen bei einem Unwuchtausgleich von Rotoren mit mehreren Lagerstellen, insbesondere von Kurbelwellen. Darüber hinaus ist ein genauer Materialabtrag gewährleistet und damit verbunden ein genaues Auswuchtergebnis. Weiterhin ist eine flexible Anpassung an unterschiedliche Rotoren bzw. Kurbelwellen möglich. Die erfindungsgemäße Einrichtung hat ferner den Vorteil, daß eine geeignete Auswuchtstelle für den Unwuchtausgleich vorgegeben werden kann, die in Achsrichtung entweder auf der einen Seite oder der anderen Seite eines Rotor-Hauptlagers liegen kann.

Nach einem weiteren Vorschlag der Erfindung ist vorgesehen, daß die Einrichtung zur Fixierung des Rotors zumindest einen einer Lagereinrichtung zuordenbaren Spannarm aufweist. Diese Ausgestaltung ist besonders einfach und kostengünstig herstellbar und hat darüber hinaus den Vorteil, daß der Späneabfluß nicht behindert wird. Ferner werden nicht ganz gerade Kurbelwellen im Bearbeitungsbereich fest auf die Lagereinrichtung gedrückt, was die Bearbeitungsgegebenheiten verbessert. Dies gilt auch für eine Weiterbildung der Erfindung, bei der eine der jeweiligen Ausgleichsebene benachbarte Lagereinrichtung als Gegenlager für den Spannarm vorgesehen ist.

Besonders vorteilhaft ist eine Ausgestaltung, bei der die Materialentfernungseinrichtung und die Einrichtung zur Fixierung des Rotors eine Baugruppe bilden, da aufgrund des modularen Aufbaus auf einfache Weise die Ausrüstung oder Nachrüstung einer Auswuchtmaschine möglich ist.

Besonders zweckmäßig ist eine Weiterbildung der Erfindung, bei der die Materialentfernungseinrichtung und die Fixiereinrichtung längs der Rotorachse und radial zur Rotorachse, vorzugsweise in der die Rotorachse enthaltenden Bearbeitungsebene unabhängig gegeneinander verschiebbar sind.

Nach einem weiteren Vorschlag der Erfindung sind zur gegenseitigen Verschiebung der Materialentfernungseinrichtung und der Fixiereinrichtung jeweils zwei orthogonal zueinander verlaufende Linearführungen vorgesehen, was die Verwendung kostengünstiger handelsüblicher Bauelemente ermöglicht.

Zweckmäßig im Hinblick auf eine rationelle Modulbauweise ist die Abstützung der Baugruppe aus Materialentfernungseinrichtung und Fixiereinrichtungen am Bett der Auswuchtmaschine. Die Abstützung der Baugruppe kann vorteilhaft über zwischengeordnete Linearführungen erfolgen.

Die Erfindung wird nachfolgend anhand eines Ausführungsbeispiels, das in der Zeichnung dargestellt ist, näher erläutert.

Es zeigen:
- Figur 1: eine Seitenansicht einer erfindungsgemäßen Auswuchtmaschine mit einer Einrichtung zum Ausgleich einer Unwucht in schematischer Darstellung
- Figur 2: eine Draufsicht auf eine erfindungsgemäße Einrichtung zum Ausgleich einer Unwucht nach Figur 1

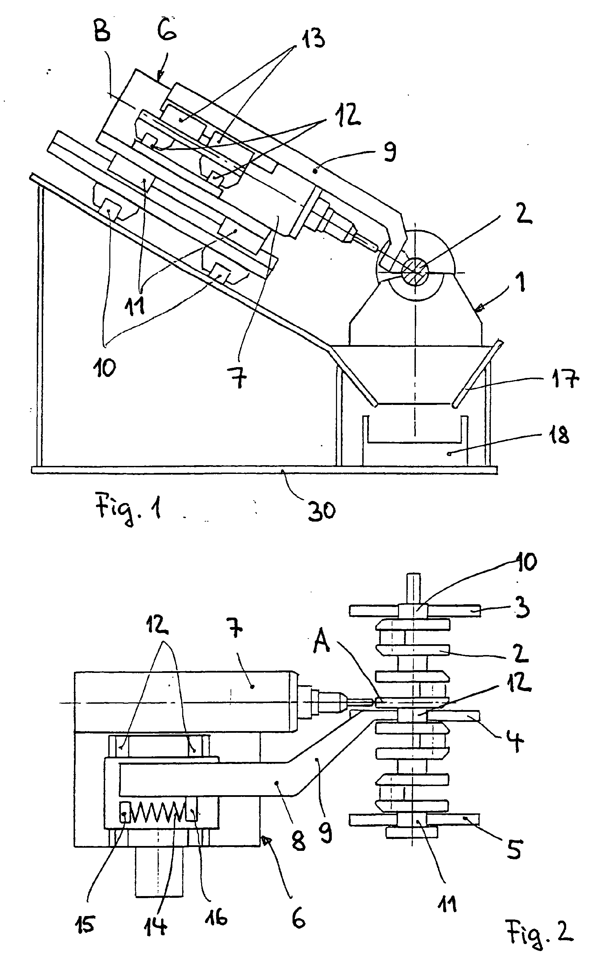

In Figur 1 ist eine Auswuchtmaschine 1 für Rotoren, im dargestellten Fall für Kurbelwellen 2 schematisch in einer Seitenansicht dargestellt. Nicht dargestellt sind eine Antriebseinrichtung für den Rotor, Meßwertaufnehmer und Auswerteinrichtungen für die Bestimmung der auszugleichenden Unwucht, da hier auf dem Auswuchtgebiet übliche Einrichtungen zum Einsatz kommen.

Die Auswuchtmaschine 1 weist einen Schwingrahmen auf, der über nicht dargestellte Federn am Maschinenbett 30 schwingfähig abgestützt ist. Der Schwingrahmen weist mehrere, im dargestellten Beispiel drei Lagereinrichtungen 3, 4, 5 auf zur Aufnahme der Kurbelwelle 2 an dafür vorgesehenen Lagerstellen der Kurbelwelle 2. Im dargestellten Ausführungsbeispiel handelt es sich um eine 4-Zylinder-Kurbelwelle 2 mit fünf möglichen Lagerstellen, von denen die beiden äußeren Lagerstellen 10, 11 und die mittige Lagerstelle 12 zur Lagerung genutzt werden. Durch Verschieben der Lagereinrichtungen 3, 4, 5 auf andere Lagerabstände und gegebenenfalls durch Hinzufügen weiterer Lagereinrichtungen lassen sich auch beispielsweise 5-Zylinder- oder 6-Zylinder-Kurbelwellen einlagern und auswuchten. Das Maschinenbett 30 ist mit Einrichtungen versehen, die dem Abtransport der beim Ausgleichsvorgang anfallenden Späne dienen; schematisch dargestellt sind Leit- oder Sammelbleche 17 und ein diesen zugeordneter Späneförderer 18 mit einem Transportband. In bekannter Weise dienen beim Unwuchtmeßlauf mit rotierendem Rotor nicht dargestellte Meßwertaufnehmer zur Erfassung der Unwuchtschwingungen und zur Winkellagenerfassung zwecks Bestimmung der auszugleichenden Unwucht nach Größe und Winkellage.

Die Auswuchtmaschine 1 weist eine Einrichtung 6 zum Ausgleich der Unwucht auf, die als eine Baugruppe ausgebildet ist und eine Materialentfernungseinrichtung 7 sowie eine Einrichtung 8 zur Fixierung des Rotors aufweist.

Die Materialentfernungseinrichtung 7 ist eine Bohreinrichtung, deren Bohrachse radial und quer zur Rotorachse angeordnet ist.

Die Einrichtung 8 zur Fixierung des Rotors weist einen Spannarm 9 auf, mit dem der Rotor beim Ausgleichsvorgang gegen eine Lagereinrichtung 3, 4, 5 gedrückt wird. Es wird dabei diejenige Lagereinrichtung 3, 4, 5 gewählt, die der vorgesehenen Ausgleichsstelle beziehungsweise -ebene zunächst liegt; in dem in Figur 2 dargestellten Ausführungsbeispiel sind dies die Auswuchtebene A und die Lagereinrichtung 4. Auch wenn der Ausgleich in der auf der anderen Seite der Lagereinrichtung 4 angeordneten Kurbelwange vorgenommen werden soll, nimmt der Spannarm 9 die dargestellte Lage ein. Die Bohreinrichtung kann dafür in Längsrichtung des Rotors in diese Ausgleichsebene verschoben werden. Hierzu ist vorgesehen, daß sich die Materialentfernungseinrichtung 7 und die Einrichtung 8 zur Fixierung des Rotors unabhängig voneinander positionieren lassen, mit anderen Worten, ihre Bewegungsbahnen überschneiden sich nicht.

Im dargestellten Beispiel ist die Einrichtung 6 zum Ausgleich der Unwucht als Baugruppe am Maschinenbett 30 abgestützt und gegenüber dem Maschinenbett 30 verschiebbar. Die Baugruppe kann dabei über eine erste Linearführung 10 parallel zur Rotorachse, d. h. in Rotorlängsrichtung verschoben werden und über eine zweite Linearführung 11 quer zur Rotorlängsrichtung und in Richtung auf die Rotorachse. Über die erste Linearführung 10 läßt sich die im dargestellten Beispiel fest an der Baugruppe montierte Materialentfernungseinrichtung 7, genauer deren Bohrer, in der vorgesehenen Ausgleichsebene A positionieren, während über die zweite Linearführung 11 der Bohrer in radialer Richtung zwecks Materialentfernung verschiebbar ist; der Bohrer ist in einer Bohrspindel aufgenommen, die üblicherweise längsverschieblich ist, so daß der Vorschub beim Bohrvorgang über einen Vorschub der Bohrspindel erfolgen kann. Unabhängig von diesen Bewegungen läßt sich die Einrichtung 8 zur Fixierung des Rotors, genauer deren Spannarm 9, über eine dritte Linearführung 12 parallel zur Rotorachse, das heißt in Rotorlängsrichtung verschieben und über eine vierte Linearführung 13 quer zur Rotorlängsrichtung in Richtung auf die Rotorachse. Über die dritte Linearführung 12 läßt sich der Spannarm 9 in Längsrichtung so verschieben, daß er gegenüber der zugeordneten Lagereinrichtung 4 positioniert ist, während er über die vierte Linearführung 13 radial gegen die Rotorlagerstelle 12 bewegt wird, so daß die Rotorlagerstelle 12 an der Lagereinrichtung 4 zur Anlage gebracht wird. Anstelle der festen Montage der Materialentfernungseinrichtung 7 an der Baugruppe kann eine feste Montage der Einrichtung 8 zur Fixierung des Rotors an der Baugruppe vorgesehen werden.

Für jede dieser verschiedenen Linearverschiebungen kann in nicht dargestellter Weise jeweils ein Stellantrieb vorgesehen sein. Dargestellt ist eine konstruktiv vereinfachte Einrichtung 6 zum Ausgleich der Unwucht, bei der die Bewegung des Spannarms 9 längs der vierten Linearführung 13 zwangsgesteuert ist, da der Spannarm 9 durch Verschieben der gesamten Baugruppe längs der zweiten Linearführung 11 in Anlage an die Rotorlagerstelle 12 gebracht und damit letztlich gegen die Lagereinrichtung 4 abgestützt wird. Bei Weiterverschiebung der Baugruppe in radialer Richtung auf die Rotorachse zu bleibt der Spannarm 9 in radialer Richtung stehen, während sich ein Spannnocken 15, der räumlich fest zur Materialentfernungseinrichtung 7 und damit zur Baugruppe angeordnet ist, auf einen Spannnocken 16 am Spannarm 9 zu bewegt und eine dazwischen liegende Feder 14 spannt, so daß das am Rotor anliegende Spannarmende diesen mit der Kraft der vorgespannten Feder 14 gegen die Lagereinrichtung 4 drückt und so den Rotor fixiert, während der Materialabtrag vorgenommen wird. Auch eine in Längsrichtung leicht gekrümmte Kurbelwelle wird so sicher gegen die Lagereinrichtung gedrückt und fixiert.

Beim Auswuchtvorgang werden also zunächst der Bohrer und der Spannarm 9 in Axialrichtung positioniert und danach radial zwecks Materialentfernung verschoben. Bevor der Bohrer den Rotor berührt, ist der Spannarm 9 in Anlage an die Rotorlagerstelle 12 gelangt und drückt den Rotor mittels der zunehmenden Federspannung der Feder 14 gegen die Lagereinrichtung 4. Anstelle der Feder 14 kann auch ein druckmittelbetätigter Zylinder, z.B. ein Pneumatikzylinder, zwischen den Spannnocken 15, 16 angeordnet werden. Mit ihm kann die Spannkraft konstanter gehalten werden als mit einer über den Verschiebeweg ansteigenden Federkraft. Der eigentliche Bohrvorschub kann über die längsverschiebliche Bohrspindel vorgenommen werden. Die beim Ausgleichsvorgang anfallenden Späne fallen nach unten und werden über Leit- oder Sammelbleche 15 einem Späneförderer zum Abtransport zugeleitet.

Für den gesamten Unwuchtausgleich wird der Bohrer durch Längsverschiebung in den vorgesehenen Ausgleichsebenen positioniert. Die Ausgleichsstellen werden durch Drehen des Rotors in der vorgesehene Winkellage gegenüber dem Bohrer angeordnet.

## Patentansprüche

1. Einrichtung (6) zum Ausgleich einer Unwucht in einer Auswuchtmaschine (1) für mehrere Lagerstellen aufweisende Rotoren, insbesondere Kurbelwellen (2), mit mehreren, Lagerstellen (10, 11, 12) eines Rotors (2) zuordenbaren Lagereinrichtungen (3, 4, 5) zur Lagerung des Rotors (2), einer Materialentfernungs-einrichtung (7), und einer Einrichtung (8) zur Fixierung des Rotors (2) beim Ausgleichsvorgang, **dadurch gekennzeichnet, daß** die Materialentfernungs-einrichtung (7) und die Einrichtung (8) zur Fixierung des Rotors (2) in Längsrichtung des Rotors (2) unabhängig voneinander positionierbar sind.

2. Einrichtung nach Anspruch 1, **dadurch gekennzeichnet, daß** die Einrichtung (8) zur Fixierung des Rotors zumindest einen einer Lagereinrichtung (3, 4, 5) zuordenbaren Spannarm (9) aufweist.

3. Einrichtung nach Anspruch 2, **dadurch gekennzeichnet, daß** eine der jeweiligen Ausgleichsebene des Rotors (2) benachbarte Lagereinrichtung (3 bzw. 4 bzw. 5) als Gegenlager für den Spannarm (9) vorhanden ist.

4. Einrichtung nach Anspruch 2 oder Anspruch 3, **dadurch gekennzeichnet, daß** der Spannarm (9) von einer Federkraft beaufschlagt ist.

5. Einrichtung nach einem oder mehreren der vorhergehenden Ansprüche, **dadurch gekennzeichnet, daß** die Materialentfernungseinrichtung (7) als Bohreinrichtung ausgebildet ist.

6. Einrichtung nach einem oder mehreren der vorhergehenden Ansprüche, **dadurch gekennzeichnet, daß** die Materialentfernungseinrichtung (7) und die Einrichtung (8) zur Fixierung des Rotors eine Baugruppe bilden.

7. Einrichtung nach einem der vorhergehenden Ansprüche, **dadurch gekennzeichnet, daß** die Materialentfernungseinrichtung (7) und die Einrichtung (8) zur Fixierung des Rotors (2) vorzugsweise in der die Rotorachse enthaltenden Bearbeitungsebene (B) längs der Rotorachse und radial zur Rotorachse unabhängig voneinander verschiebbar sind.

8. Einrichtung nach Anspruch 7, **dadurch gekennzeichnet, daß** zur Verschiebung die Materialentfernmungseinrichtung (7) und die Einrichtung (8) zur Fixierung des Rotors (2) jeweils mittels zwei orthogonal zueinander verlaufenden Linearführungen (11, 12; 12, 13) versehen sind.

9. Einrichtung nachAnspruch 6, **dadurch gekennzeichnet, daß** die Baugruppe (6) am Bett (30) der Auswuchtmaschine (1) abgestützt ist.

10. Einrichtung nach Anspruch 9, **dadurch gekennzeichnet, daß** die Abstützung am Bett (30) über zwischengeordnete Linearführungen (10, 11) erfolgt.

11. Einrichtung nach einem oder mehreren der vorhergehenden Ansprüche, **dadurch gekennzeichnet, daß** die Bearbeitungssebene (B) zur Vertikalen geneigt ist.

## Claims

1. Device (6) for compensating imbalance in a balancing machine (1) for rotors comprising a plurality of bearings, in particular crankshafts (2), having a plurality of mounting devices (3, 4, 5), which can be assigned to bearings (10, 11, 12) of a rotor (2), for mounting the rotor (2), a material removal device (7), and a device (8) for fixing the rotor (2) during the compensation process, **characterised in that** the material removal device (7) and the device (8) for fixing the rotor (2) can be positioned independently of one another in the longitudinal direction of the rotor (2).

2. Device according to claim 1, **characterised in that** the device (8) for fixing the rotor comprises at least one clamping arm (9) which can be assigned to a mounting device (3, 4, 5).

3. Device according to claim 2, **characterised in that** one of the mounting devices (3 or 4 or 5) adjacent to the respective compensation plane of the rotor (2) is provided as a thrust bearing for the clamping arm (9).

4. Device according to either claim 2 or claim 3, **characterised in that** the clamping arm (9) is loaded by a spring force.

5. Device according to one or more of the preceding claims, **characterised in that** the material removal device (7) is configured as a drilling device.

6. Device according to one or more of the preceding claims, **characterised in that** the material removal device (7) and the device (8) for fixing the rotor form a assembly.

7. Device according to any one of the preceding claims, **characterised in that** the material removal device (7) and the device (8) for fixing the rotor (2) are preferably displaceable independently of one another in the working plane (B) containing the rotor axis along the rotor axis and radially relative to the rotor axis.

8. Device according to claim 7, **characterised in that** in order to achieve displacement the material removal device (7) and the device (8) for fixing the rotor (2) are each provided with two linear guides (11, 12; 12, 13) extending orthogonal to one another.

9. Device according to claim 6, **characterised in that** the module (6) is supported on the bed (30) of the balancing machine (1).

10. Device according to claim 9, **characterised in that** support on the bed (30) is achieved via intermediate linear guides (10, 11).

11. Device according to one or more of the preceding claims, **characterised in that** the working plane (B) is inclined relative to the vertical.

## Revendications

1. Dispositif (6) pour équilibrer un balourd dans une machine d'équilibrage (1) pour des pièces tournantes munies de plusieurs points d'appui, en particulier des vilebrequins (2), comportant plusieurs dispositifs d'appui (3, 4, 5), pouvant être associés aux points d'appui (10, 11, 12) d'une pièce tournante (2) et destinés à supporter la pièce tournante (2), un dispositif d'enlèvement de matière (7) et un dispositif (8) destiné à bloquer la pièce tournante (2) pendant le processus d'équilibrage, **caractérisé en ce que** le dispositif d'enlèvement de matière (7) et le dispositif (8) destiné à bloquer la pièce toumante (2) peuvent être positionnés indépendamment l'un de l'autre dans la direction longitudinale de la pièce tournante (2).

2. Dispositif selon la revendication 1, **caractérisé en ce que** le dispositif (8) destiné à bloquer la pièce toumante comporte au moins un bras de serrage (9) à associer à un dispositif d'appui (3, 4, 5).

3. Dispositif selon la revendication 2, **caractérisé en ce que** l'un des dispositifs d'appui (3 ou 4 ou 5), adjacent au plan d'équilibrage correspondant de la pièce toumante (2), fait fonction de contre-butée pour le bras de serrage (9).

4. Dispositif selon la revendication 2 ou 3, **caractérisé en ce que** le bras de serrage (9) est sollicité par la force d'un ressort.

5. Dispositif selon une ou plusieurs des revendications précédentes, **caractérisé en ce que** le dispositif d'enlèvement de matière (7) est conçu sous forme de dispositif de perçage.

6. Dispositif selon une ou plusieurs des revendications précédentes, **caractérisé en ce que** le dispositif d'enlèvement de matière (7) et le dispositif (8) destiné à bloquer la pièce toumante forment un groupe modulaire.

7. Dispositif selon l'une des revendications précédentes, **caractérisé en ce que** le dispositif d'enlèvement de matière (7) et le dispositif (8) destiné à bloquer la pièce toumante (2) peuvent être déplacés en translation, indépendamment l'un de l'autre, de préférence dans le plan d'usinage (B) contenant l'axe de la pièce tournante, le long de l'axe de la pièce toumante et radialement par rapport à l'axe de la pièce tournante.

8. Dispositif selon la revendication 7, **caractérisé en ce que** pour le mouvement de translation, le dispositif d'enlèvement de matière (7) et le dispositif (8) destiné à bloquer la pièce tournante (2) sont munis chacun de deux guides linéaires (11, 12; 12, 13) disposés orthogonalement l'un par rapport à l'autre.

9. Dispositif selon la revendication 6, **caractérisé en ce que** le groupe modulaire (6) est mis en appui sur la table (30) de la machine à équilibrer (1).

10. Dispositif selon la revendication 9, **caractérisé en ce que** la mise en appui sur la table (30) est assurée par l'intermédiaire de guides linéaires (10, 11) intercalés.

11. Dispositif selon une ou plusieurs des revendications précédentes, **caractérisé en ce que** le plan d'usinage (B) est incliné par rapport à la verticale.
